# EUROPÄISCHE PATENTSCHRIFT

(11) **EP 2 670 524 B1**
(45) Veröffentlichungstag und Bekanntmachung des Hinweises auf die Patenterteilung: **10.05.2017**
(21) Anmeldenummer: 12702261.4
(22) Anmeldetag: 03.02.2012
(51) Int. Cl.: B01F 17/14, C08F 2/38, C08F 20/04

(54) **NIEDERMOLEKULARE PHOSPHORHALTIGE POLYACRYLSÄUREN UND DEREN VERWENDUNG ALS DISPERGIERMITTEL**
LOW-MOLECULAR-WEIGHT POLYACRYLIC ACIDS CONTAINING PHOSPHORUS AND USE THEREOF AS DISPERSANTS
ACIDES POLYACRYLIQUES À FAIBLE POIDS MOLÉCULAIRE CONTENANT DU PHOSPHORE ET LEUR UTILISATION COMME AGENT DE DISPERSION

(30) Priorität: 04.02.2011 EP 11153364
(43) Veröffentlichungstag der Anmeldung: 11.12.2013
(73) Patentinhaber: BASF SE, 67056 Ludwigshafen am Rhein (DE)
(72) Erfinder: URTEL, Bolette, 67240 Bobenheim-Roxheim (DE); WIRSCHEM, Ruth, 68159 Mannheim (DE); HEINTZ, Ewald, 76889 Schweigen-Rechtenbach (DE); FAUL, Dieter, 67150 Niederkirchen (DE)
(86) Internationale Anmeldenummer: PCT/EP2012/051819
(87) Internationale Veröffentlichungsnummer: WO 2012/104401

(56) Entgegenhaltungen:
- EP-A1- 0 510 831
- EP-A1- 0 618 240
- EP-A1- 0 792 890
- US-A- 5 216 099

## Beschreibung

Die Erfindung betrifft niedermolekulare phosphorhaltige Polyacrylsäuren, diese enthaltende wässrige Lösungen, Verfahren zu deren Herstellung sowie deren Verwendung als Dispergiermittel.

Dispergiermittel, insbesondere Polyacrylsäuren, finden eine breite Anwendung in technischen Prozessen, bei denen ein Feststoff in eine pumpfähige Dispersion überführt wird. Um eine breite industrielle Anwendung zu gewährleisten, müssen diese Dispersionen, auch Slurries genannt, sowohl eine gute Pumpfähigkeit als auch Lagerbeständigkeit (geringe Alterung) bei gleichzeitig hohem Feststoffgehalt aufweisen. Letzteren gilt es möglichst zu steigern wegen der hohen Energie- und Transportkosten. Ein typisches Beispiel ist die Verwendung von wässrigen Calciumcarbonat-Slurries bei der Herstellung von graphischen Papieren. Während gute Fließeigenschaften der Slurries im wesentlichen die Prozessfähigkeit bei der Papierherstellung bzw. des Papier-Coatings sicherstellen, bedingt die Feinheit des dispergierten Feststoffs die optischen Eigenschaften des daraus hergestellten Papiers, wie beispielsweise die Opazität. Eine geringere Partikelgröße bei gleichem Feststoffgehalt der Slurry ergibt eine höhere Opazität des daraus hergestellten Papiers. Die Partikelgröße wird dabei nicht nur durch den Eintrag von mechanischer Energie während der Naßvermahlung des Pigments, sondern auch durch die Wahl des eingesetzten Dispergiermittels entscheidend beeinflusst.

Es ist bekannt, dass mittels radikalischer Polymerisation hergestellte niedermolekulare Polyacrylsäuren gute dispergierende Eigenschaften aufweisen. Für eine gute Wirkung sollte das gewichtsmittlere Molekulargewicht (Mw) dieser Polymere < 50 000 sein. Oft sind Polyacrylsäuren mit Mw < 10 000 besonders effektiv. Um niedermolekulare Polyacrylsäuren herzustellen, werden Molekulargewichtsregler bzw. Kettenüberträger während der radikalischen Polymerisation von Acrylsäure zugesetzt. Diese Regler müssen auf den Polymerisationsinitiator sowie auf den Polymerisationsprozess abgestimmt sein. Bekannte Initiatoren sind beispielsweise anorganische und organische Perverbindungen, wie Peroxodisulfate, Peroxide, Hydroperoxide und Perester, Azoverbindungen wie 2,2'-Azobisisobutyronitril und Redoxsysteme mit anorganischen und organischen Komponenten. Als Regler werden häufig anorganische Schwefelverbindungen wie Hydrogensulfite, Disulfite und Dithionite, organische Sulfide, Sulfoxide, Sulfone und Mercaptoverbindungen wie Mercaptoethanol, Mercaptoessigsäure sowie anorganische Phosphorverbindungen wie Hypophosphorige Säure (Phosphinsäure) und ihre Salze (z.B. Natriumhypophosphit) eingesetzt.

EP-A 405 818 offenbart ein Verfahren zur Herstellung von Polymeren aus monoethylenisch ungesättigten Monocarbonsäuren und optional weiteren Monomeren mit Natriumpersulfat als Starter in Gegenwart von Hypophosphit als Regler, bei dem ein alkalisches Neutralisationsmittel während der Polymerisation in einer Menge, die ausreicht, um mindestens 20% der sauren Gruppen zu neutralisieren, zugegen ist. Die erhaltenen niedermolekularen Polymere enthalten mindestens 80% des aus dem Hypophosphit stammenden Phosphors. Mindestens 70% des Phosphors sollen sich als Dialkylphosphinat innerhalb der Polymerkette wieder finden. Die so hergestellten Polymere werden u.a. als Waschmitteladditive, Dispergiermittel für Clay-Slurries oder Belagsverhinderer für die Wasserbehandlung eingesetzt.

In den Ausführungsbeispielen wird Acrylsäure in Zulauf-Fahrweise in Gegenwart von Hypophosphit als Regler und Natriumpersulfat als Starter in Wasser polymerisiert, wobei während der Polymerisation Natronlauge als weiterer kontinuierlicher Zulauf zugegeben wird. Es wird eine wässrige Polyacrylsäure mit einem gewichtsmittleren Molekulargewicht M_{w} von 2700 g/mol erhalten, welche 72% des im Natriumphosphit enthaltenen Phosphors als Dialkylphosphinat, 18% als Monoalkylphosphinat und 10% in Form anorganischer Salze enthält. In einem Vergleichsbeispiel wird auf den Natronlaugezulauf verzichtet und erst nach Beendigung der Polymerisation mit Natronlauge neutralisiert. Dabei wird eine wässrige Polyacrylsäure mit einem gewichtsmittleren Molekulargewicht M_{w} von 4320 g/mol erhalten, welche nur 45% des im Natriumphosphit enthaltenen Phosphors als Dialkylphosphinat, 25% als Monoalkylphosphinat und 30% in Form anorganischer Salze enthält.

EP-A 510 831 offenbart ein Verfahren zur Herstellung von Polymeren aus monoethylenisch ungesättigten Monocarbonsäuren, monoethylenisch ungesättigten Dicarbonsäuren und optional weiteren Monomeren, die keine Carboxylgruppe enthalten, in Gegenwart von Hypophosphoriger Säure als Kettenüberträger. Mindestens 40% des im Polymer eingebauten Phosphors liegen als Monoalkylphosphinat und Monoalkylphosphonat am Ende der Polymerkette vor. Die Copolymere finden u.a. Verwendung als Dispergiermittel, Belagsinhibitor und Waschmitteladditiv.

EP-A 618 240 offenbart ein Verfahren zur Polymerisation von Monomeren in Wasser in Gegenwart eines wasserlöslichen Initiators und hypophosphoriger Säure oder eines ihrer Salze. Das Verfahren wird so durchgeführt, dass am Ende der Polymerisation der Polymergehalt mindestens 50 Gew.-% beträgt. Durch diese Fahrweise gelingt es, die Menge an aus dem Hypophosphit stammenden, im Polymer eingebauten Phosphor zu erhöhen. Dieser liegt in Form von Dialkylphoshinat, Monoalkylphosphinat sowie Monoalkylphosphonat im Polymer vor. Über die Verteilung des Phosphors wird keine Aussage gemacht. Die Copolymere finden u.a. Verwendung als Dispergiermittel, Beiagsinhibitoren und Waschmitteladditive.

EP-A 0 792 890 (D4) offenbart ein Verfahren zur Herstellung von Phosphonatterminierten Polycarboxylaten durch Polymerisation von ungesättigten Carbonsäuren in Gegenwart von Phosphorsäure.

EP-A 1 074 293 offenbart Phosphonat-terminierte Polyacrylsäure mit einem Molekulargewicht M_{w} von 2000 bis 5800 g/mol als Dispergiermittel zur Herstellung wässriger Slurries von Calciumcarbonat, Kaolin, Ton, Talk und Metalloxiden mit einem Feststoffgehalt von mindestens 60 Gew.-%.

JP-2010-773340 beschreibt die Herstellung von wässrigen Dispersionen von Acrylsäure-Polymeren, enthaltend Phosphinatgruppen. Die Polymerisation von Acrylsäure erfolgt durch ein kontinuierliches Verfahren in Gegenwart von Hypophosphit und Peroxodisulfat. Durch das Verfahren lassen sich Acrylsäure-Polymere mit einem Molekulargewicht Mw von 6442 erhalten, in welchen der Anteil des gebundenen Phosphors innerhalb der Hauptkette 77%, bezogen auf den Phosphorgesamtgehalt, beträgt. Aufgabe der Erfindung ist es, niedermolekulare Polyacrylsäuren mit verbesserter Dispergierwirkung bereitzustellen.

Gelöst wird die Aufgabe durch wässrige Lösungen von Acrylsäure-Polymeren mit einem gewichtsmittleren Molekulargewicht von 3500 bis 20 000 g/mol und einem Phosphor-Gesamtgehalt von organisch und gegebenenfalls anorganisch gebundenem Phosphor, wobei
(a) ein erster Teil des Phosphors in Form von in der Polymerkette gebundenen Phosphinat-Gruppen vorliegt,
(b) ein zweiter Teil des Phosphors in Form von am Polymerkettenende gebundenen Phosphinat- und/oder Phosphonat-Gruppen vorliegt,
(c) gegebenenfalls ein dritter Teil des Phosphors in Form von gelösten anorganischen Phosphorsalzen vorliegt,
dadurch gekennzeichnet, dass mindestens 80% des Phosphor-Gesamtgehalts in Form von in der Polymerkette gebundenen Phosphinat-Gruppen vorliegt und das Verhältnis von in der Polymerkette gebundenem Phosphor zu am Kettenende gebundenem Phosphor mindestens 4 : 1 beträgt.

Im Allgemeinen liegen höchstens 20%, bevorzugt höchstens 15% des Phosphors in Form von am Polymerkettenende gebundenen Phosphinat- und/oder Phosphonat-Gruppen vor. Besonders bevorzugt liegen 5 bis 15% und insbesondere 7 bis 13% des Phosphors in Form von am Polymerkettenende gebundenen Phosphinat- und/oder Phosphonat-Gruppen vor.

Bis zu 20% des in der wässrigen Lösung der Acrylsäure-Polymere enthaltenen Phosphors können in Form von anorganischem Phosphor, insbesondere in Form von Hypophosphit und Phosphit vorliegen. Vorzugsweise liegen 2 bis 15%, besonders bevorzugt 4 bis 11% des Gesamt-Phosphors in Form von anorganisch gebundenem Phosphor vor.

Das Verhältnis von in der Polymerkette gebundenem Phosphor zu am Kettenende gebundenem Phosphor beträgt vorzugsweise mindestens 5 : 1 bis 10 : 1, insbesondere 6 : 1 bis 9 : 1.

Im Allgemeinen beträgt das gewichtsmittlere Molekulargewicht des Acrylsäure-Polymers 3500 bis 20 000 g/mol, bevorzugt 3500 bis 8000 g/mol und besonders bevorzugt 3500 bis 6500 g/mol. Das Molekulargewicht kann innerhalb dieser Bereiche gezielt durch die verwendete Regler-Menge eingestellt werden.

Der Anteil von Polymeren mit einem Molekulargewicht von < 1000 g/mol beträgt im Allgemeinen ≤ 10 Gew.-%, bevorzugt ≤ 5 Gew.-%, bezogen auf das gesamte Polymer.

Die Molekulargewichte werden mittels GPC an auf pH 7 gepufferten wässrigen Lösungen der Polymere unter Verwendung von Hydroxyethylmethacrylat-Copolymer-Netzwerk als stationärer Phase und von Natriumpolyacrylat-Standards ermittelt.

Im Allgemeinen beträgt der Polydispersitätsindex des Acrylsäure-Polymers M_{w} / Mₙ ≤ 2,5, bevorzugt 1,5 bis 2,5, beispielsweise 2.

Die K-Werte, bestimmt nach der Fikentscher-Methode an einer 1 gew.-%igen Lösung in VE-Wasser, betragen im Allgemeinen von 10 bis 50, bevorzugt von 15 bis 35 und besonders bevorzugt von 20 bis 30.

Das Acrylsäure-Polymer kann bis zu 30 Gew.-%, bevorzugt bis zu 20 Gew.-%, besonders bevorzugt bis zu 10 Gew.-%, bezogen auf alle ethylenisch ungesättigten Monomere, ethylenisch ungesättigte Comonomere mit einpolymerisiert enthalten. Beispiele für geeignete ethylenisch ungesättigte Comonomere sind Methacrylsäure, Maleinsäure, Maleinsäureanhydrid, Vinylsulfonsäure, Allylsulfonsäure und 2-Acrylamido-2-methylpropansulfonsäure sowie deren Salze. Auch Mischungen dieser Comonomere können enthalten sein.

Insbesondere bevorzugt sind Acrylsäure-Homopolymere ohne Comonomer-Anteil.

Gegenstand der Erfindung ist auch ein Verfahren zur Herstellung von wässrigen Lösungen durch Polymerisation von Acrylsäure in Zulauf-Fahrweise mit Peroxodisulfat als Starter in Gegenwart von Hypophosphit als Regler in Wasser als Lösungsmittel, bei dem
(i) Wasser und gegebenenfalls ein oder mehrere ethylenisch ungesättigte Comonomere vorgelegt,
(ii) Acrylsäure in saurer, nicht neutralisierter Form, gegebenenfalls eines oder mehrere ethylenisch ungesättigte Comonomere, wässrige Peroxodisulfat-Lösung und wässrige Hypophosphit-Lösung kontinuierlich zugegeben werden, und
(iii) nach Beendigung des Acrylsäure-Zulaufs zu der Lösung Base zugegeben wird,
wobei der Comonomer-Gehalt 30 Gew.-%, bezogen auf den Gesamtmonomer-Gehalt, nicht übersteigt.

Die Comonomere können in dem Reaktionsansatz vorgelegt werden, zum Teil vorgelegt und zum Teil als Zulauf zugegegeben oder ausschließlich als Zulauf zugegeben werden. Werden sie teilweise oder insgesamt als Zulauf zugegeben, so werden sie im Allgemeinen synchron mit der Acrylsäure zugegeben.

Im Allgemeinen wird Wasser vorgelegt und auf die Reaktionstemperatur von mindestens 75°C, bevorzugt 95 bis 105°C erwärmt. Bei Temperaturen unterhalb von 75°C zerfällt Peroxodisulfat im Allgemeinen nicht mehr mit ausreichender Geschwindigkeit.

Zusätzlich kann eine wässrige Lösung von Phosphoriger Säure als Korrosionsinhibitor mit vorgelegt werden.

Anschließend werden die kontinuierlichen Zuläufe von Acrylsäure, gegebenenfalls dem weiteren Monomer, Starter und Regler gestartet. Acrylsäure wird in nicht neutralisierter, saurer Form zugegeben. Im Allgemeinen werden alle Zuläufe gleichzeitig gestartet. Sowohl Peroxodisulfat als Starter als auch Hypophoshit als Regler werden in Form ihrer wässrigen Lösungen eingesetzt. Peroxodisulfat wird im Allgemeinen in Form des Natrium- oder Ammoniumsalzes eingesetzt. Hypophosphit kann in Form von Hypophosphoriger Säure (Phosphinsäure) oder in Form von Salzen der Hypophosphorigen Säure eingesetzt werden. Besonders bevorzugt wird Hypophosphit als Hypophosphorige Säure oder als Natriumsalz eingesetzt.

Der Peroxodisulfat-Gehalt der wässrigen Peroxodisulfat-Lösung beträgt vorzugsweise 5 bis 10 Gew.-%. Der Hypophosphit-Gehalt der wässrigen Hypophosphit-Lösung beträgt vorzugsweise 35 bis 70 Gew.-%.

Bevorzugt wird Peroxodisulfat in Mengen von 0,5 bis 10 Gew.-%, bevorzugt 0,8 bis 5 Gew.-%, bezogen auf die Gesamtmenge an Monomeren (Acrylsäure und gegebenenfalls Comonomere), eingesetzt.

Bevorzugt wird Hypophosphit in Mengen von 4 bis 8 Gew.-%, bevorzugt 5 bis 7 Gew.-%, bezogen auf die Gesamtmenge an Monomeren, eingesetzt.

Die Zugabe der einzelnen Zuläufe erfolgt bevorzugt linear, d.h. die Zulaufmenge pro Zeiteinheit Δm / Δt (=Zulaufgeschwindigkeit) ist über die gesamte Dauer des Zulaufs konstant.

Die Dauer des Starter-Zulaufs kann bis zu 50% länger sein als die Dauer des Acrylsäure-Zulaufs. Vorzugsweise ist die Dauer des Starter-Zulaufs um ca. 3 bis 25% länger als die Dauer des Acrylsäure-Zulaufs. Die Dauer des Regler-Zulaufs kann bis zu 30% kürzer sein als die Dauer des Acrylsäure-Zulaufs. Bevorzugt ist die Dauer des Regler-Zulaufs um ca. 3 bis 20% kürzer als die Dauer des Acrylsäure-Zulaufs.

Die Dauer des Monomer-Zulaufs bzw. - bei Verwendung eines Comonomeren - der Monomer-Zuläufe beträgt beispielsweise 3 bis 6 h. Beispielsweise endet bei gleichzeitigem Start aller Zuläufe der Regler-Zulauf 10 bis 20 min vor dem Ende des Monomer-Zulaufs, und endet der Starter-Zulauf 10 bis 20 min nach dem Ende des Monomer-Zulaufs.

Im Allgemeinen wird nach Beendigung des Acrylsäure-Zulaufs zu der wässrigen Lösung eine Base zugegeben. Dadurch wird das gebildete Acrylsäure-Polymer zumindest teilweise neutralisiert. Teilweise neutralisiert heißt, dass nur ein Teil der in dem Acrylsäure-Polymer enthaltenen Carboxylgruppen in der Salzform vorliegt. Im Allgemeinen wird so viel Base zugegeben, dass der pH-Wert anschließend im Bereich von 3 bis 8,5, vorzugsweise 4 bis 8,5, insbesondere 4,0 bis 5,5 (teilweise neutralisiert) oder 6,5 bis 8,5 (vollständig neutralisiert) liegt. Als Base wird vorzugsweise Natronlauge eingesetzt. Daneben können auch Ammoniak oder Amine, beispielsweise Triethanolamin, eingesetzt werden. Der dabei erzielte Neutralisationsgrad der erhaltenen Polyacrylsäuren liegt zwischen 15 und 100 %, bevorzugt zwischen 30 und 100 %. Die Neutralisation erfolgt im Allgemeinen über einen längeren Zeitraum von beispielsweise ½ bis 3 Stunden, um die Neutralisationswärme gut abführen zu können.

In einer Variante wird die Polymerisation unter Inertgasatmosphäre durchgeführt. Dabei werden Acrylsäure-Polymere erhalten, deren terminal gebundener Phosphor im Wesentlichen vollständig (im Allgemeinen zu mindestens 90%) in Form von Phosphinat-Gruppen vorliegt.

In einer weiteren Variante wird nach Beendigung der Polymerisation ein Oxidationsschritt durchgeführt. Durch den Oxidationsschritt werden terminale Phosphinat-Gruppen in terminale Phosphonat-Gruppen überführt. Die Oxidation erfolgt im Allgemeinen durch Behandlung des Acrylsäure-Polymers mit einem Oxidationsmittel, bevorzugt mit wässriger Wasserstoffperoxid-Lösung.

Es werden wässrige Lösungen von Acrylsäure-Polymeren mit einem Feststoffgehalt von im Allgemeinen mindestens 30 Gew.-%, bevorzugt mindestens 35 Gew.-%, besonders bevorzugt 40 bis 70 Gew.-%, insbesondere 40 bis 55 Gew.-% Polymer erhalten.

Die erhaltenen wässrigen Lösungen der Acrylsäure-Polymere können direkt als Dispergiermittel eingesetzt werden.

Die Acrylsäure-Polymere können auch durch geeignete Trocknungsverfahren wie Sprühtrocknung, Walzentrocknung oder Schaufeltrocknung in Pulverform überführt werden.

Die Erfindung betrifft auch die Verwendung der wässrigen Lösungen der Acrylsäure-Polymere bzw. der Acrylsäure-Polymere selbst als Dispergierhilfsmittel für anorganische Pigmente und Füllstoffe, wie z.B. CaCO₃, Kaolin, Talkum, TiO₂, ZnO, ZrO₂, Al₂O₃ und MgO.

Die daraus gewonnenen Slurries werden als Weißpigmente für graphische Papiere und Anstrichfarben, als Deflocculants für die Herstellung von keramischen Werkstoffen oder auch als Füllstoffe für Thermoplasten verwendet. Die Acrylsäure-Polymere können aber auch für andere Zwecke verwendet werden, beispielsweise in Waschmitteln, Geschirrreinigern, technischen Reinigern, zur Wasserbehandlung oder als Ölfeldchemikalien. Falls gewünscht können sie vor der Anwendung durch verschiedene Trocknungsverfahren, z.B. Sprühtrocknung, Walzentrocknung oder Schaufeltrocknung, in Pulverform überführt werden.

Besonders bevorzugte Dispersionen (Slurries), für deren Herstellung die erfindungsgemäßen Acrylsäure-Polymere verwendet werden, sind Dispersionen von gemahlenem Calciumcarbonat. Die Mahlung wird kontinuierlich oder diskontinuierlich in wässriger Suspension durchgeführt. Der Calciumcarbonatgehalt liegt in dieser Suspension in der Regel bei ≥ 50 Gew.-%, bevorzugt bei ≥ 60 Gew.-% und besonders bevorzugt bei ≥ 70 Gew.-%. Üblicherweise werden, jeweils bezogen auf das in der Suspension enthaltene Calciumcarbonat, 0,1 bis 2 Gew.-%, vorzugsweise 0,3 bis 1,5 Gew.-%, der erfindungsgemäß verwendeten Polyacrylsäure eingesetzt. Vorzugsweise haben in diesen Calciumcarbonat-Slurries nach der Mahlung 95% der Teilchen eine Teilchengröße von kleiner als 2 µm und 70% der Teilchen eine Teilchengröße von kleiner als 1 µm. Die erhaltenen Calciumcarbonat-Slurries weisen ausgezeichnete rheologische Eigenschaften auf und sind auch nach mehrtägiger Lagerung noch pumpfähig, wie aus den Viskositätsverläufen in Tabelle 2 ersichtlich ist.

Die Erfindung wird durch die nachstehenden Beispiele näher erläutert.

### Beispiele

Alle Molekulargewichte wurden mittels GPC ermittelt. Die für GPC verwendeten Bedingungen sind wie folgt: 2 Säulen (Suprema Linear M) und eine Vorsäule (Suprema Vorsäule), alle der Marke Suprema-Gel (HEMA) von der Firma Polymer Standard Services (Mainz, Deutschland), wurde bei 35°C mit einer Flussrate von 0,8 ml/min betrieben. Als Eluent wurde die mit TRIS bei pH 7 gepufferte wässrige Lösung, die mit 0,15 M NaCl und 0,01 M NaN₃ versetzt waren, eingesetzt. Die Kalibrierung erfolgte mit einem Na-PAA Standard, deren integrale Molekulargewichtsverteilungskurve durch SEC-Laserlichtstreukopplung bestimmt worden war, nach dem Kalibrierverfahren von M.J.R. Cantow u.a. (J. Polym. Sci., A-1, 5(1967) 1391-1394), allerdings ohne die dort vorgeschlagene Konzentrationskorrektur. Alle Proben wurden mit einer 50 gew.-%igen Natronlauge auf pH 7 gestellt. Ein Teil der Lösung wurde mit VE-Wasser auf einen Feststoffgehalt von 1,5 mg/mL verdünnt und 12 Stunden lang gerührt. Anschließend wurden die Proben filtriert, und 100 µL wurde durch eine Sartorius Minisart RC 25 (0.2 µm)) eingespritzt.

### Beispiel 1

In einem geschlossenen Reaktor wurden 425 g VE-Wasser vorgelegt. Anschließend wurde unter Stickstoff-Atmosphäre auf 98°C Innentemperatur erhitzt. Bei dieser Temperatur wurden gleichzeitig 481 g einer destillierten Acrylsäure, 69 g einer 7 gew.-%igen wässrigen Natriumperoxodisulfat-Lösung und 82 g einer 59 gew.-%igen wässrigen Natriumhypophosphit-Lösung separat und parallel unter Rühren zudosieren. Die Zuläufe wurden gleichzeitig gestartet. Acrylsäure wurde innerhalb von 4 Stunden, Natriumperoxodisulfat innerhalb von 4,25 Stunden und Natriumhypophosphit innerhalb von 3,75 Stunden zudosiert. Nach Ende des Acrylsäure-Zulaufs wurde mit 30 g VE-Wasser die Acrylsäure-Leitung gespült und anschließend 55 g einer 50 gew.-%ige wässrigen Natriumhydroxid-Lösung innerhalb von 1 Stunde bei 98°C Innentemperatur zugegeben. Nachfolgend wurden noch 225 g VE-Wasser zugegeben und die Polymer-Lösung auf Raumtemperatur abgekühlt. Es wurden der pH-Wert, die Molekulargewichte Mₙ und M_{w} und der Feststoffgehalt bestimmt und die Lösung visuell beurteilt.

### Beispiel 2

In einem Reaktor wurden 363,0 g VE-Wasser vorgelegt und anschließend unter Stickstoff-Atmosphäre auf 95°C Innentemperatur erhitzt. Bei dieser Temperatur wurden gleichzeitig 865,6 g einer destillierten Acrylsäure, 260,0 g einer 7 gew.-%igen wässrigen Natriumperoxodisulfat-Lösung und 227,0 g einer 40 gew.-%igen wässrigen Natriumbisulfit-Lösung separat und parallel unter Rühren zudosiert. Die Zuläufe wurden gleichzeitig gestartet. Die Acrylsäure wurde innerhalb von 5 Stunden, Natriumperoxodisulfat innerhalb von 5,25 Stunden und Natriumbisulfit innerhalb von 5 Stunden zudosiert. Nach Ende des Acrylsäure-Zulaufs wurde die Leitung mit 9,0 g VE-Wasser gespült und danach 336,6 g einer 50 gew.-%igen wässrigen Natriumhydroxid-Lösung innerhalb von 2 Stunden bei 95 °C Innentemperatur zugegeben. Danach wurde die Polymer-Lösung auf Raumtemperatur abgekühlt. Es wurden der pH-Wert, die Molekulargewichte Mₙ und M_{w}, der Feststoffgehalt und der Acrylsäure-Restgehalt bestimmt und die Lösung visuell beurteilt.

### Beispiel 3

In einem Reaktor wurden 230,0 g VE-Wasser zusammen mit 2,57 g einer 50 gew.-%igen wässrigen Lösung von Phosphoriger Säure vorgelegt. Anschließend wurde unter Stickstoff-Atmosphäre auf 102°C Innentemperatur erhitzt. Bei dieser Temperatur wurden gleichzeitig 480,8 g einer destillierten Acrylsäure, 69,0 g einer 7 gew.-%igen wässrigen Natriumperoxodisulfat-Lösung und 57,0 g einer 59 gew.-%igen wässrigen Natriumhypophosphit-Lösung separat und parallel unter Rühren zudosiert. Die Acrylsäure wurde innerhalb von 5 Stunden, Natriumperoxodisulfat innerhalb von 5,25 Stunden und Natriumhypophosphit innerhalb von 4,75 Stunden zudosiert. Nach Ende des Acrylsäure-Zulaufs wurde die Leitung mit 30,0 g VE-Wasser gespült und 2 Stunden bei 95°C Innentemperatur gerührt. Dann wurden 175,0 g VE-Wasser zugegeben und dabei die Polymer-Lösung auf Raumtemperatur abgekühlt. Anschließend wurde mit 50 gew.-%iger Natronlauge die Polymerlösung auf pH 7 eingestellt. Es wurden der pH-Wert, die Molekulargewichte Mₙ und M_{w} und der Feststoffgehalt bestimmt und die Lösung visuell beurteilt.

### Beispiel 4

Es wurde wie in Beispiel 3 verfahren, jedoch wurde keine Phosphorige Säure vorgelegt. Die erhaltene Polymer-Lösung wurde nicht durch Zugabe von Natronlauge neutralisiert. 500 g der so erhaltenen Polymer-Lösung wurden in einem Reaktor vorgelegt und unter Stickstoff-Atmosphäre auf 95°C Innentemperatur erhitzt. Bei dieser Temperatur wurden 89,0 g einer 50 gew.-%igen wässrigen Natriumhydroxid-Lösung über 1 Stunde zudosiert. 15 Minuten nach Beginn des Natronlauge-Zulaufs wurden 20,0 g einer wässrigen Wasserstoffperoxid-Lösung innerhalb von 30 Minuten zudosiert. Nach Ende des Natronlauge-Zulaufs wurde 2 Stunden bei 95°C Innentemperatur nachgerührt. Danach wurde die Polymer-Lösung auf Raumtemperatur abgekühlt. Es wurden der pH-Wert, die Molekulargewichte Mₙ und M_{w} und der Feststoffgehalt bestimmt und die Lösung visuell beurteilt.

### Beispiel 5

In einem Reaktor wurden 365,0 g VE-Wasser vorgelegt. Anschließend wurde unter Stickstoff-Atmosphäre auf 95°C Innentemperatur erhitzt. Bei dieser Temperatur wurden gleichzeitig 764,0 g einer destillierten Acrylsäure, 109,6 g einer 7 gew.-%igen wässrigen Natriumperoxodisulfat-Lösung und 52,0 g einer 59 gew.-%igen wässrigen Natriumhypophosphit-Lösung separat und parallel unter Rühren zudosiert. Die Zuläufe wurden gleichzeitig gestartet. Acrylsäure wurde innerhalb von 4 Stunden, Natriumperoxodisulfat innerhalb von 4,25 Stunden und Natriumhypophosphit innerhalb von 3,75 Stunden zudosiert. Nach Ende des Acrylsäure-Zulaufs wurden 527,0 g einer 50 gew.-%igen wässrigen Natriumhydroxid-Lösung innerhalb von 1 Stunde bei 95°C Innentemperatur zugeben. Danach wurden 300 g VE-Wasser zugegeben und dabei die Polymer-Lösung auf Raumtemperatur abgekühlt. Es wurden der pH-Wert, die Molekulargewichte Mₙ und M_{w}, der Feststoffgehalt und der Acrylsäure-Restgehalt bestimmt und die Lösung visuell beurteilt.

Die analytischen Daten der hergestellten Acrylsäure-Polymere sind in der nachstehenden Tabelle 1 zusammengefasst.

**Tabelle 1**

| Beispiel | Feststoffgehalt [%]^{a} | K Wert^{b} | pH (tq) | Mw<1000 [%] | Mw^{c} | PDI^{c} | %-P intern^{d} | %-P terminal^{d} | %-P anorganisch^{d} |
|---|---|---|---|---|---|---|---|---|---|
| 1 | 36,4 | 20,1 | 4,5 | n. b. | 3620 | 1,7 | 81.4 | 11.4 | 7.2 |
| 2 | 50,2 | 24,9 | 4,0 | 5,2 | 5710 | 2,3 | - | - | - |
| 3 | 45,2 | 25,0 | 7,0 | 3,2 | 5560 | 2,1 | 78,5 | 11,2 | 10,4 |
| 4 | 45,5 | 24,5 | 4,2 | 3,5 | 4960 | 1,9 | 82,1 | 11,0 | 6,9 |
| 5 | 46,0 | 33,2 | 4,2 | 1,8 | 8470 | 2,3 | 82.0 | 12.2 | 5.7 |

| | | | | | | | | | |
|---|---|---|---|---|---|---|---|---|---|
| ^{a)} ISO 3251, (0.25 g, 150°C, 2h) ^{b)} bestimmt durch Fikentscher Methode mit einer 1%iger Lösung in VE-Wasser ^{c)} bestimmt durch Gel Permeation Chromatographie d) bestimmt mit ³¹P{¹H} and ³¹P NMR | | | | | | | | | |

### Anwendungstests

### Verwendung der Acrylsäure-Polymere als Dispergiermittel

Die hergestellten Polyacrylsäurelösungen wurden auf ihre Eignung als Dispergiermittel zur Herstellung von Slurries getestet. Dazu wurde jeweils eine Vermahlung von Calciumcarbonat (Hydrocarb OG von Omya) mit einem Dispermaten durchgeführt. Hierfür wurden jeweils 300 g Calciumcarbonat und 600 g Keramikperlen gemischt und in einem 500 ml Doppelwandgefäß, das mit Leitungswasser gefüllt ist, vorgelegt. Anschließend wurden 100 g einer 3 gew.-%ige wässrige Lösung der zu testenden Polyacrylsäure, welche zuvor mit NaOH auf pH 5 eingestellt wurde, zugegeben. Die Mahlung erfolgte mittels eines Mahlaggregats vom Typ Dispermat AE-C (Hersteller VMA-Getzmann) mit einem Kreuzbalkenrührer bei einer Umdrehungszahl von 1200 U/min. Sobald 70% des Pigments eine Teilchengröße (TGV) von kleiner 1 µm aufwiesen, wurde die Mahlung beendet (ca. 70 min, Partikelmessgerät LS 13320, Fa. Beckman Coulter). Nach der Mahlung wurde der Slurry zur Abtrennung der Keramikperlen über ein 780 µm-Filter mit Hilfe einer Porzellannutsche filtriert und der Feststoffgehalt der Slurry auf 77% eingestellt. Die Viskosität des Slurry wurde sofort, nach 1h, nach 24 h, nach 96 h und nach 168 h mit Hilfe eines Brookfield Viskosimeters DV II bestimmt (mit Spindel Nr. 3).

Die Ergebnisse der Dispergierversuche sind in Tabelle 2 zusammengestellt.

**Tabelle 2**

| Beispiel | Partikelgrößenverteilung | | Dynamische Viskosität [mPas] bei 100 rpm | | | | | FG Slurry [%] |
|---|---|---|---|---|---|---|---|---|
| | < 2 µm | < 1 µm | sofort | nach 1 h | nach 24 h | nach 96 h | nach 168 h | |
| 1 | 99,4 | 75,4 | 500 | 2016 | 4185 | n. b. | n. b. | 77,0 |
| 2 | 98,8 | 72,6 | 451 | 1554 | 2801 | 4367 | 5063 | 77,0 |
| 3 | 98,7 | 73,7 | 356 | 690 | 2142 | 3450 | 3450 | 77,0 |
| 4 | 99,0 | 72,5 | 278 | 536 | 1118 | 2130 | 2765 | 77,0 |
| 5 | 98,3 | 72,6 | 416 | 1164 | 2190 | 3250 | 3851 | 77,0 |

| | | | | | | | | |
|---|---|---|---|---|---|---|---|---|
| n.b.: nicht bestimmbar, >5000 mPas | | | | | | | | |

## Patentansprüche

1. Wässrige Lösung von Acrylsäure-Polymeren mit einem gewichtsmittleren Molekulargewicht von 3500 bis 20.000 g/mol und mit einem Phosphor-Gesamtgehalt von organisch und gegebenenfalls anorganisch gebundenem Phosphor, wobei
(a) ein erster Teil des Phosphors in Form von in der Polymerkette gebundenen Phosphinat-Gruppen vorliegt,
(b) ein zweiter Teil des Phosphors in Form von am Polymerkettenende gebundenen Phosphinat- und/oder Phosphonat-Gruppen vorliegt,
(c) gegebenenfalls ein dritter Teil des Phosphors in Form von gelösten anorganische Phosphorsalze vorliegt,
**dadurch gekennzeichnet, dass** mindestens 80% des Phosphor-Gesamtgehalts in Form von in der Polymerkette gebundenen Phosphinat-Gruppen vorliegt und dass das Verhältnis von in der Polymerkette gebundenem Phosphor zu am Kettenende gebundenem Phosphor mindestens 4 : 1 beträgt.

2. Wässrige Lösung nach Anspruch 1, **dadurch gekennzeichnet, dass** höchstens 15% des Phosphors in Form von am Polymerkettenende gebundenen Phosphinat- und/oder Phosphonat-Gruppen vorliegt.

3. Wässrige Lösung nach Anspruch 1 oder 2, **dadurch gekennzeichnet, dass** das gewichtsmittlere Molekulargewicht der Acrylsäure-Polymere 3500 bis 8000 g/mol beträgt.

4. Wässrige Lösung nach einem der Ansprüche 1 bis 3, **dadurch gekennzeichnet, dass** das gewichtsmittlere Molekulargewicht der Acrylsäure-Polymere 3500 bis 6500 g/mol beträgt.

5. Wässrige Lösung nach einem der Ansprüche 1 bis 4, **dadurch gekennzeichnet, dass** der Polydispersitätsindex der Acrylsäure-Polymere M_{w} / Mₙ < 2,5 ist.

6. Wässrige Lösung nach einem der Ansprüche 1 bis 5, **dadurch gekennzeichnet, dass** die Acrylsäure-Polymere Acrylsäure-Homopolymere sind.

7. Wässrige Lösung nach einem der Ansprüche 1 bis 6, **dadurch gekennzeichnet, dass** die Acrylsäure-Polymere Acrylsäure-Copolymere sind, welche bis zu 30 Gew.-%, bezogen auf alle ethylenisch ungesättigten Monomere, ethylenisch ungesättigte Comonomere, ausgewählt aus der Gruppe bestehend aus Methacrylsäure, Maleinsäure(anhydrid), Vinylsulfonsäure, Allylsulfonsäure und 2-Acrylamido-2-methylpropansulfonsäure einpolymerisiert enthalten.

8. Die aus den wässrigen Lösungen nach einem der Ansprüche 1 bis 7 erhältlichen Acrylsäure-Polymere.

9. Verfahren zur Herstellung von wässrigen Lösungen nach einem der Ansprüche 1 bis 7 durch Polymerisation von Acrylsäure in Zulauf-Fahrweise mit Peroxodisulfat als Starter in Gegenwart von Hypophosphit in Wasser als Lösungsmittel, bei dem Wasser und gegebenenfalls ein oder mehrere ethylenisch ungesättigte Comonomere vorgelegt und Acrylsäure in saurer, nicht neutralisierter Form, gegebenenfalls eines oder mehrere ethylenisch ungesättigte Comonomere, eine wässrige Peroxodisulfat-Lösung und eine wässrige Hypophosphit-Lösung, kontinuierlich zugegeben werden, wobei der Comonomer-Gehalt 30 Gew.-%, bezogen auf den Gesamtmonomer-Gehalt, nicht übersteigt.

10. Verfahren nach Anspruch 9, **dadurch gekennzeichnet, dass** nach Beendigung des Acrylsäure-Zulaufs zu der wässrigen Lösung eine Base zugegeben wird.

11. Verfahren nach Anspruch 9 oder 10, **dadurch gekennzeichnet, dass** die Polymerisation unter Inertgasatmosphäre durchgeführt wird.

12. Verfahren nach einem der Ansprüche 9 bis 11, **dadurch gekennzeichnet, dass** nach Beendigung der Polymerisation ein Oxidationschritt durchgeführt wird.

13. Verwendung der wässrigen Lösungen nach einem der Ansprüche 1 bis 7 und der Acrylsäure-Polymere nach Anspruch 8 als Dispergiermittel in wässrigen Feststoff-Dispersionen.

14. Verwendung nach Anspruch 13 in wässrigen Dispersionen von CaCO₃, Kaolin, Talkum, TiO₂, ZnO, ZrO₂, Al₂O₃ oder MgO.

## Claims

1. An aqueous solution of acrylic acid polymers having a weight average molecular weight of from 3500 to 20 000 g/mol and having a total phosphorus content of organically and possibly inorganically bound phosphorus, wherein
(a) a first portion of the phosphorus is present in the form of phosphinate groups bound within the polymer chain,
(b) a second portion of the phosphorus is present in the form of phosphinate and/or phosphonate groups bound at the polymer chain end,
(c) possibly a third portion of the phosphorus is present in the form of dissolved inorganic salts of phosphorus,
wherein at least 80% of the total phosphorus content is present in the form of phosphinate groups bound within the polymer chain and wherein the ratio of phosphorus bound within the polymer chain to phosphorus bound at the chain end is at least 4:1.

2. The aqueous solution according to claim 1 wherein at most 15% of the phosphorus is present in the form of phosphinate and/or phosphonate groups bound at the polymer chain end.

3. The aqueous solution according to claim 1 or 2 wherein the weight average molecular weight of the acrylic acid polymers is in the range from 3500 to 8000 g/mol.

4. The aqueous solution according to any one of claims 1 to 3 wherein the weight average molecular weight of the acrylic acid polymers is in the range from 3500 to 6500 g/mol.

5. The aqueous solution according to any one of claims 1 to 4 wherein the M_{w}/Mₙ polydispersity index of the acrylic acid polymers is < 2.5.

6. The aqueous solution according to any one of claims 1 to 5 wherein the acrylic acid polymers are acrylic acid homopolymers.

7. The aqueous solution according to any one of claims 1 to 6 wherein the acrylic acid polymers are acrylic acid copolymers comprising up to 30% by weight, based on all ethylenically unsaturated monomers, of ethylenically unsaturated comonomers selected from the group consisting of methacrylic acid, maleic acid, maleic anhydride, vinylsulfonic acid, allylsulfonic acid and 2-acrylamido-2-methylpropane sulfonic acid as polymerized units.

8. The acrylic acid polymers obtainable from the aqueous solutions according to any one of claims 1 to 7.

9. A process for preparing aqueous solutions according to any one of claims 1 to 7 by polymerization of acrylic acid in feed operation with peroxodisulfate as initiator in the presence of hypophosphite in water as solvent, which process comprises initially charging water and optionally one or more ethylenically unsaturated comonomers and continuously adding acrylic acid in acidic, unneutralized form, optionally one or more ethylenically unsaturated comonomers, an aqueous peroxodisulfate solution and an aqueous hypophosphite solution, wherein the comonomer content does not exceed 30% by weight, based on total monomer content.

10. The process according to claim 9 wherein a base is added on completion of the acrylic acid feed to the aqueous solution.

11. The process according to claim 9 or 10 wherein the polymerization is carried out under an inert gas atmosphere.

12. The process according to any one of claims 9 to 11 wherein an oxidation step is carried out following completion of the polymerization.

13. The use of the aqueous solutions according to any one of claims 1 to 7 and of the acrylic acid polymers according to claim 8 as dispersants in aqueous dispersions of solid material.

14. The use according to claim 13 in aqueous dispersions of CaCO₃, kaolin, talcum, TiO₂, ZnO, ZrO₂, Al₂O₃ or MgO.

## Revendications

1. Solution aqueuse de polymères de l'acide acrylique ayant un poids moléculaire moyen en poids de 3 500 à 20 000 g/mol et ayant une teneur totale en phosphore de phosphore relié organiquement et éventuellement inorganiquement,
(a) une première partie du phosphore se présentant sous la forme de groupes phosphinate reliés dans la chaîne polymère,
(b) une deuxième partie du phosphore se présentant sous la forme de groupes phosphinate et/ou phosphonate reliés à l'extrémité de la chaîne polymère,
(c) éventuellement une troisième partie du phosphore se présentant sous la forme de sels de phosphore inorganiques dissous,
**caractérisée en ce qu'**au moins 80 % de la teneur totale en phosphore se présente sous la forme de groupes phosphinate reliés dans la chaîne polymère et **en ce que** le rapport entre le phosphore relié dans la chaîne polymère et le phosphore relié à l'extrémité de la chaîne est d'au moins 4:1.

2. Solution aqueuse selon la revendication 1, **caractérisée en ce qu'**au plus 15 % du phosphore se présente sous la forme de groupes phosphinate et/ou phosphonate reliés à l'extrémité de la chaîne polymère.

3. Solution aqueuse selon la revendication 1 ou 2, **caractérisée en ce que** le poids moléculaire moyen en poids des polymères de l'acide acrylique est de 3 500 à 8 000 g/mol.

4. Solution aqueuse selon l'une quelconque des revendications 1 à 3, **caractérisée en ce que** le poids moléculaire moyen en poids des polymères de l'acide acrylique est de 3 500 à 6 500 g/mol.

5. Solution aqueuse selon l'une quelconque des revendications 1 à 4, **caractérisée en ce que** l'indice de polydispersité des polymères de l'acide acrylique M_{w}/Mₙ est < 2,5.

6. Solution aqueuse selon l'une quelconque des revendications 1 à 5, **caractérisée en ce que** les polymères de l'acide acrylique sont des homopolymères de l'acide acrylique.

7. Solution aqueuse selon l'une quelconque des revendications 1 à 6, **caractérisée en ce que** les polymères de l'acide acrylique sont des copolymères de l'acide acrylique, qui contiennent sous forme copolymérisée jusqu'à 30 % en poids, par rapport à tous les monomères éthyléniquement insaturés, de comonomères éthyléniquement insaturés choisis dans le groupe constitué par l'acide méthacrylique, (l'anhydride de) l'acide maléique, l'acide vinylsulfonique, l'acide allylsulfonique et l'acide 2-acrylamido-2-méthylpropanesulfonique.

8. Polymères de l'acide acrylique pouvant être obtenus à partir des solutions aqueuses selon l'une quelconque des revendications 1 à 7.

9. Procédé de fabrication de solutions aqueuses selon l'une quelconque des revendications 1 à 7 par polymérisation d'acide acrylique par le procédé à alimentations avec du peroxodisulfate en tant que démarreur en présence d'hypophosphite dans de l'eau en tant que solvant, selon lequel l'eau et éventuellement un ou plusieurs comonomères éthyléniquement insaturés sont chargés initialement, et l'acide acrylique sous forme acide non neutralisée, éventuellement un ou plusieurs comonomères éthyléniquement insaturés, une solution aqueuse de peroxodisulfate et une solution aqueuse d'hypophosphite sont ajoutés en continu, la teneur en comonomères ne dépassant pas 30 % en poids, par rapport à la teneur totale en monomères.

10. Procédé selon la revendication 9, **caractérisé en ce qu'**une base est ajoutée après la fin de l'alimentation de l'acide acrylique dans la solution aqueuse.

11. Procédé selon la revendication 9 ou 10, **caractérisé en ce que** la polymérisation est réalisée sous une atmosphère de gaz inerte.

12. Procédé selon l'une quelconque des revendications 9 à 11, **caractérisé en ce qu'**une étape d'oxydation est réalisée après la fin de la polymérisation.

13. Utilisation des solutions aqueuses selon l'une quelconque des revendications 1 à 7 et des polymères de l'acide acrylique selon la revendication 8 en tant que dispersant dans des dispersions aqueuses de solides.

14. Utilisation selon la revendication 13, dans des dispersions aqueuses de CaCO₃, de kaolin, de talc, de TiO₂, de ZnO, de ZrO₂, d'Al₂O₃ ou de MgO.
